# EUROPÄISCHE PATENTSCHRIFT

(11) **EP 0 422 138 B1**
(45) Veröffentlichungstag und Bekanntmachung des Hinweises auf die Patenterteilung: **23.03.1994**
(21) Anmeldenummer: 90902254.3
(22) Anmeldetag: 08.02.1990
(51) Int. Cl.: B60T 11/21, B62D 11/08

(54) **HAUPTZYLINDER FÜR EINE HYDRAULISCHE BREMS- UND LENKBREMSANLAGE**
MASTER CYLINDER FOR A HYDRAULIC BRAKE AND STEERING BRAKE SYSTEM
MA TRE-CYLINDRE POUR SYSTEMES HYDRAULIQUES DE FREINAGE ET DE FREINS DE DIRECTION

(30) Priorität: 21.04.1989 DE 3913353; 06.11.1989 DE 3936832
(43) Veröffentlichungstag der Anmeldung: 17.04.1991
(73) Patentinhaber: ITT Automotive Europe GmbH, 60488 Frankfurt (DE)
(72) Erfinder: RÜHL, Ute, D-6365 Rosbach 3 (DE)
(86) Internationale Anmeldenummer: EP9000202
(87) Internationale Veröffentlichungsnummer: WO9012714

(56) Entgegenhaltungen:
- EP-A- 0 129 964
- DE-A- 2 840 914
- DE-A- 3 339 367
- DE-A- 3 445 259
- GB-A- 2 139 720

## Beschreibung

Die Erfindung betrifft einen Hauptzylinder für eine hydraulische Brems- und Lenkbremsanlage für Kraftfahrzeuge, mit einem Paar Hauptzylinder, die zum Abbremsen eines Fahrzeuges gleichzeitig und zur Lenkunterstützung unabhängig voneinander betätigbar sind und je einen pedalbetätigten, in einer im Hauptzylindergehäuse vorgesehenen Bohrung verschiebbar geführten, einen Druckraum begrenzenden Kolben aufweisen, wobei die Druckräume mit einem drucklosen Druckmittelvorratsbehälter in Verbindung stehen, mit Bremsen an Rädern auf entgegengesetzten Seiten des Fahrzeugs verbindbar sind, und über eine Ausgleichsleitung miteinander verbunden werden, wenn die Hauptzylinder gleichzeitig betätigt werden bzw. mittels einer Ventileinrichtung voneinander getrennt werden, wenn einer der Hauptzylinder allein betätigt wird.

Ein derartiger Hauptzylinder ist aus der DE-OS 32 19 042 bekannt. Um die oben erwähnte Ausgleichsleitung anschließen zu können, weist das Gehäuse des vorbekannten Hauptzylinders einen radialen Auslaßkanal auf, in dem ein Ausgleichsventil angeordnet ist, dessen Schließkörper eine im Druckraum mündende Ausgleichsöffnung absperrt bzw. freigibt. Zur Betätigung des Schließkörpers ist ein mit dem Hauptzylinderkolben zusammenwirkendes Druckstück vorgesehen, das in Gestalt einer Kugel im Abstand vom Schließkörper in der Ausgleichsöffnung geführt ist. Das Gehäuse des bekannten Hauptzylinders weist an seinem vorderen Ende eine Füllöffnung auf, die eine hydraulische Verbindung zwischen dem Druckraum und einem Druckmittelvorratsbehälter darstellt und mittels eines vom Hauptzylinderkolben betätigbaren Füllventils steuerbar ist.

Weniger vorteilhaft anzusehen sind bei dem vorbekannten Hauptzylinder die verhältnismäßig hohen Herstellungs- und Montagekosten, die vor allem auf den Einsatz mehrerer Bauteile, die insbesondere zur Realisierung des Füll- und Ausgleichsventils erforderlich sind, zurückzuführen sind.

Es ist daher Aufgabe der vorliegenden Erfindung, einen Hauptzylinder der eingangs genannten Gattung anzugeben, bei dem die Anzahl der erforderlichen Bauteile reduziert werden kann.

Diese Aufgabe wird erfindungsgemäß durch die Merkmale des Anspruchs 1 gelöst.

Zur Konkretisierung des Erfindungsgedenkens wird vorgeschlagen, daß am Übergang zwischen dem Druck- und dem Ausgleichsraum eine Schräge ausgebildet ist, in bzw. nach deren dem Druckraum zugewandtem Bereich die Dichtmanschette anliegt.

Eine vorteilhafte, einfach herstellbare und zuverlässig arbeitende Weiterbildung des Erfindungsgegenstandes besteht darin, daß der Ausgleichsraum durch einen in der Bohrung ausgebildeten Ringraum größeren Durchmessers gebildet ist, der durch ein am Schaltkolben angeordnetes Dichtelement von einem drucklosen Raum getrennt ist, der einerseits durch den Boden der Bohrung und andererseits durch einen am Schaltkolben ausgebildeten Führungsbund begrenzt ist und daß das Dichtelement als eine zweite Dichtmanschette ausgebildet ist, die in einer Ringnut angeordnet ist, deren dem Ausgleichsraum abgewandte Flanke durch den Führungsbund gebildet ist. Durch diese Maßnahme wird eine Verbesserung der Führung des Schaltkolbens erreicht.

Bei einer anderen vorteilhaften Weiterbildung der Erfindung wird vorgesehen, daß der Schaltkolben mit einem Anschlag versehen ist, der bei Betätigung am Hauptzylindergehäuse anschlägt und durch einen axialen zylindrischen Fortsatz des Schaltkolbens gebildet ist, der am Boden der Bohrung anschlägt.

Bei einem gattungsgemäßen Hauptzylinder, dessen Kolben mit einer Primärmanschette versehen ist, die in Ruhestellung im Abstand von der Mündung eines den Druckmittelvorratsbehälter mit dem Druckraum verbindenden Schnüffelloches angeordnet ist, wird erfindungsgemäß vorgeschlagen, daß die Stirnfläche des Fortsatzes in Ruhestellung in einem Abstand vom Boden angeordnet ist, der dem Abstand zwischen der Primärmanschette und dem Schnüffelloch entspricht.

Durch diese Maßnahme wird ein druckloses Öffnen der Verbindung zwischen dem Druck- und dem Ausgleichsraum gewährleistet, da die Dichtmanschette von der Schräge abhebt, bevor das Schnüffelloch von der Primärmanschette überfahren wird.

Um ein Eindringen von Verunreinigungen bzw. Feuchtigkeit ins Innere des erfindungsgemäßen Hauptzylinders zu vermeiden, sieht eine andere Ausführungsform des Erfindungsgegenstandes vor, daß der drucklose Raum mit dem Druckmittelvorratsbehälter verbindbar ist. Bei einer besonders kompakten Weiterbildung wird vorgeschlagen, daß im Hauptzylindergehäuse Druckmittelkanäle vorgesehen sind, die den drucklosen Raum mit einem den Druckraum mit dem Druckmittelvorratsbehälter verbindenden Behälteranschluß verbinden.

Eine wesentliche Vereinfachung des Erfindungsgegenstandes bei gleichzeitiger Verkürzung dessen axialer Baulänge wird dadurch erreicht, daß der Schaltkolben unmittelbar am Kolben anliegt und mit ihm kraft- und formschlüssig verbunden ist, wobei der Ausgleichsraum durch den sich zwischen dem Boden der Bohrung und der Schräge erstreckenden Abschnitt gebildet ist. Der Schaltkolben weist dabei eine durchgehende Bohrung auf, die einen den Schaltkolben mit dem Kolben verbindenden Schraubbolzen aufnimmt und mittels eines mit einer Dichtung versehenen Gewindestopfens verschlossen ist, der den Anschlag des Schaltkolbens am Boden der Bohrung bildet. Durch diese Maßnahme wird eine im Ausgleichsraum angeordnete, die beiden Kolben zurückstellende Druckfeder vor Beschädigung geschützt.

Eine andere vorteilhafte Ausführungsvariante des Erfindungsgegenstandes sieht vor, daß der Kolben eine axiale zylindrische Verlängerung aufweist, auf der der Schaltkolben aufgeschoben und mit einem an der Verlängerung ausgebildeten Gewindeabschnitt verschraubt ist. Durch die genaue Passung zwischen den beiden Kolben wird deren einwandfreie Zentrierung erreicht. Der Schaltkolben kann vorzugsweise mit zylinderförmigen Führungsflächen versehen sein, die mit der Wandung der im Gehäuse ausgebildeten Bohrung zusammenwirken.

Eine besonders kostengünstig herstellbare Ausführung des Erfindungsgegenstandes wird dadurch erreicht, daß der Schaltkolben einschließlich seines Fortsatzes einteilig mit dem Kolben ausgebildet ist und daß die Dichtmanschette von einer auf den Schaltkolben aufgeschobenen Hülse gehalten wird, die gegenüber dem Schaltkolben abgedichtet und unverschiebbar angeordnet ist. Am Übergang zwischen dem Kolben und dem Schaltkolben ist eine Führungshülse unverschiebbar angeordnet, die im Druckraum mit der Wandung der Bohrung zusammenwirkt.

Weitere Merkmale und Vorteile der Erfindung gehen aus der folgenden Beschreibung von fünf Ausführungsbeispielen hervor, wobei die einander entsprechenden Teile mit den gleichen Bezugszeichen versehen sind. In der beiliegenden Zeichnung zeigen:
- Fig. 1: die Verwendung von zwei gleichen Hauptzylindern nach der Erfindung in einer hydraulischen Brems- und Lenkbremsanlage für Fahrzeuge in rein schematischer Darstellung;
- Fig. 2: einen Längsschnitt durch eine erste Ausführung des erfindungsgemäßen Hauptzylinders;
- Fig. 3: einen Längsschnitt durch eine zweite Ausführung des erfindungsgemäßen Hauptzylinders;
- Fig. 4: einen Längsschnitt durch eine dritte Ausführung des erfindungsgemäßen Hauptzylinders;
- Fig. 5: einen Längsschnitt durch eine vierte Ausführung des erfindungsgemäßen Hauptzylinders;
- Fig. 6: einen Teilschnitt A-A nach Fig. 5 und
- Fig. 7: einen Längsschnitt durch eine fünfte Ausführung des erfindungsgemäßen Hauptzylinders.

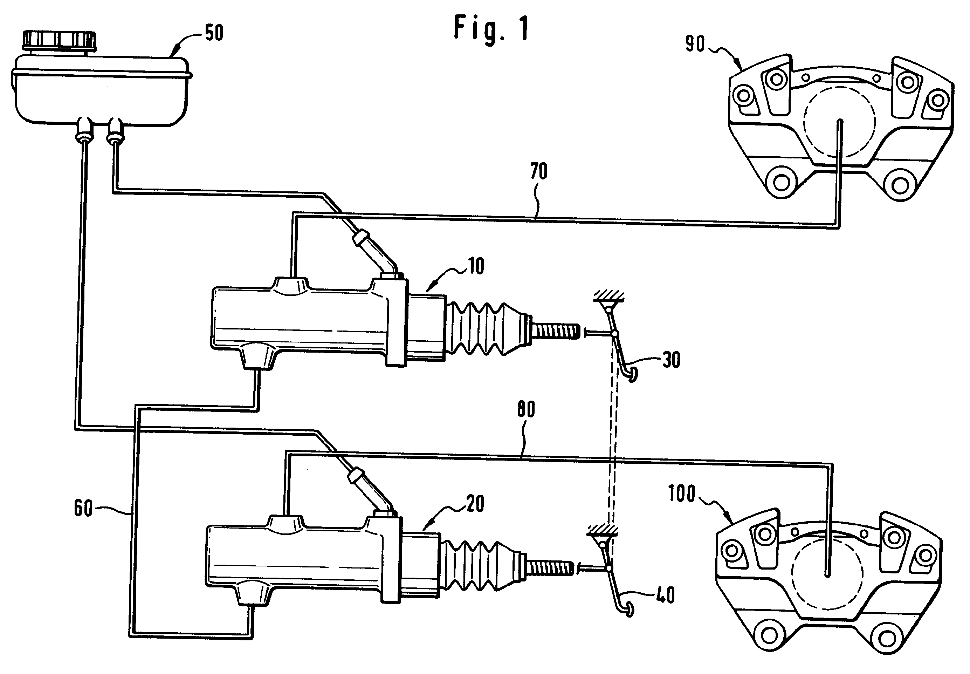

Wie Fig. 1 zeigt, besteht die Brems- und Lenkbremsanalage aus einem ersten Hauptzylinder 10, einem zweiten Hauptzylinder 20, Bremsleitungen 70 und 80 sowie zwei der angetriebenen Achse eines Kraftfahrzeuges zugeordneten Bremsen 90 und 100. Die mittels einer Ausgleichsleitung 60 miteinander verbundenen Hauptzylinder 10 und 20 stehen in Verbindung mit einem drucklosen Druckmittelvorratsbehälter 50 und sind über Bremspedale 30,40 einzeln bzw. gemeinsam (gestrichelt dargestellt) betätigbar. Die in Fig. 1 gezeigte Brems- und Lenkbremsanlage arbeitet wie folgt: Werden die beiden Bremspedale 30,40 gleichzeitig zum Zwecke der Abbremsung der angetriebenen Fahrzeugräder betätigt, so werden näher nicht bezeichnete Kolben der beiden Hauptzylinder 10,20 verschoben, so daß in deren Druckräumen ein hydraulischer Druck aufgebaut wird. Gleichzeitig werden an den Anschlußstellen der Ausgleichsleitung 60 sitzende nicht gezeigte Ausgleichsventile geöffnet, so daß ein Druckausgleich zwischen den Druckräumen der beiden Hauptzylinder 10,20 hergestellt wird. Der in den Druckräumen herrschende Druck pflanzt sich über die Bremsleitungen 70,80 zu den Bremsen 90,100 der angetriebenen Fahrzeugachse fort und bewirkt deren Betätigung. Der vorstehend beschriebene Bremsvorgang gewährleistet einen absolut gleichmäßigen Druckaufbau in den beiden Bremsleitungen 70,80 bzw. eine vollständig gleichmäßige Abbremsung der beiden Räder.

Zum Zwecke der Lenkbremsung wird nur einer der beiden Hauptzylinder 10,20 betätigt. Wird beispielsweise der Kolben des Hauptzylinders 10 verschoben, dann baut sich in dessen Druckraum ein Druck auf, der über die Bremsleitung 70 auf die Bremse 90 einwirkt, gleichzeitig aber auch über das nun offene Ausgleichsventil und die Ausgleichsleitung 60 auf das geschlossene Ausgleichsventil des zweiten Hauptzylinders 20. Da jedoch dessen Kolben unbetätigt und demnach das Ausgleichsventil geschlossen bleibt, bleibt auch der Durchgang zur anderen Bremsleitung 80 gesperrt, so daß die andere Radbremse 100 drucklos ist. Weil die Hauptzylinder 10,20 von gleicher Konstruktion sind, wird im nachfolgenden Text nur einer der beiden erläutert.

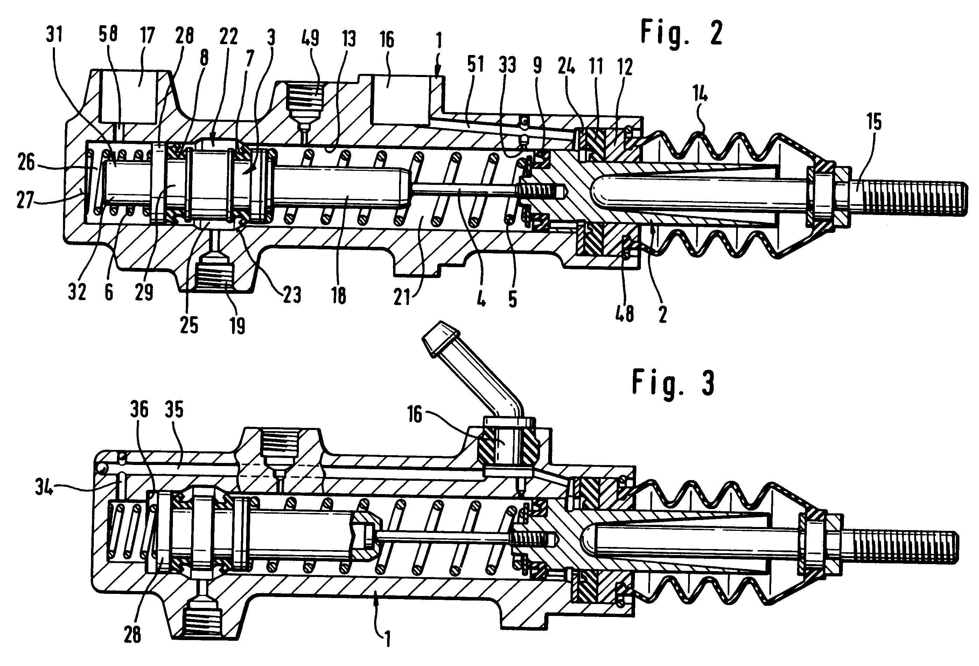

Der in Fig. 2 gezeigte Hauptzylinder weist ein Hauptzylindergehäuse 1 auf, dessen längsverlaufende Bohrung 13 an einem Ende durch einen Boden 27 verschlossen ist und einen Kolben 2 sowie einen ihm in Betätigungsrichtung nachgeschalteten Schaltkolben 3 aufnimmt. Das Hauptzylindergehäuse 1 verfügt über vier hydraulische Anschlüsse 16,17,19 und 49, deren Aufgabe im nachfolgenden Text näher erläutert wird. Der eine Primärmanschette 9 tragende Kolben 2 stützt sich in Ruhestellung über eine metallische Anschlagscheibe 24 an einer Dichtung, beispielsweise einer Manschette 11 oder einem Dichtring, ab, die an einem Verschlußstück 12 axial anliegt. Das Verschlußstück 12 wird im Hauptzylindergehäuse 1 mittels eines Sicherungsringes 48 gehalten und weist eine näher nicht bezeichnete radiale Umfangsnut auf, die ein Ende eines elastischen Faltenbalges 14 aufnimmt, dessen anderes Ende an einer den Kolben 2 betätigenden Kolbenstange 15 befestigt ist, die mit einem Bremspedal in Verbindung steht.

Der Kolben 2 begrenzt in der Bohrung 13 einen hydraulischen Druckraum 21, der über ein darin mündendes Schnüffelloch 33 sowie einen bis an die Anschlagscheibe 24 herangeführten Druckmittelkanal 51 mit dem hydraulischen Anschluß 16 verbunden ist, an den der im Zusammenhang mit Fig. 1 erwähnte Druckmittelvorratsbehälter 50 angeschlossen werden kann. An den zweiten, mit dem Druckraum 21 in Verbindung stehenden Anschluß 49 wird eine zur Radbremse führende Bremsleitung angeschlossen.

Im Druckraum 21 ist außerdem eine erste Druckfeder 5 vorgesehen, die zwischen dem Kolben 2 und dem Schaltkolben 3 angeordnet ist. Die Druckfeder 5 ist dabei am Kolben 2 mittels einer Anschlaghülse 18 sowie einer sich an der Anschlaghülse 18 abstützenden Fesselungsschraube 4 gefesselt, die an der Stirnseite des Kolbens 2 eingeschraubt ist.

An den Druckraum 21 schließt in der Betätigungsrichtung ein über den dritten hydraulischen Anschluß 19 mit der Ausgleichsleitung 60 (Fig. 1) verbindbarer Ausgleichsraum 22 an, der als ein in der Bohrung 13 ausgebildeter Ringraum 25 größeren Durchmessers mittels einer am Schaltkolben 3 angeordneten Dichtmanschette 7 vom Druckraum 21 getrennt ist. Am Übergang zwischen dem Druckraum 21 und dem Ausgleichsraum 25 ist in der Bohrung 13 eine umlaufende Schräge 23 ausgebildet, die mit der am Schaltkolben 3 angeordneten Dichtmanschette 7 zusammenwirkt.

Der Ausgleichsraum 25 grenzt an einen am Ende der Bohrung 13 ausgebildeten drucklosen Raum 26 an, der einerseits durch ein am Schaltkolben 3 angebrachtes Dichtelement 8 und andererseits durch den Boden 27 der Bohrung 13 begrenzt ist und über einen radialen Durchgang 58 mit dem vierten Anschluß 17 in Verbindung steht. Der Anschluß 17 kann entweder zur Atmosphäre hin offen oder an den Druckmittelvorratsbehälter angeschlossen sein. Das Dichtelement 8 wird im dargestellten Beispiel durch eine zweite Dichtmanschette gebildet, die in einer am Schaltkolben 3 ausgebildeten radialen Ringnut 29 untergebracht ist. Die Ringnut 29 ist auf der in der Zeichnung linken Seite durch einen Führungsbund 28 begrenzt, dessen Durchmesser dem der Bohrung 13 entspricht und der als Anlagefläche für eine zweite Druckfeder 6 dient, die sich am Boden 27 abstützt. Die Federkraft der zweiten Druckfeder 6 ist niedriger als die der ersten Druckfeder 5. Die Bewegung des Schaltkolbens 3 in Betätigungsrichtung wird durch einen Anschlag 31 begrenzt, der beim Gegenstand der Fig. 2 durch einen axialen Fortsatz 32 des Schaltkolbens 3 gebildet ist. Die Stirnfläche des Fortsatzes 32 befindet sich in der Ruhestellung in einem Abstand vom Boden 27, der dem Abstand der Primärmanschette 9 von Schnüffelloch 33 entspricht. Dadurch wird gewährleistet, daß bei Betätigung die Dichtmanschette 7 von der Schräge 23 abhebt, bevor im Druckraum 21 ein hydraulischer Druck aufgebaut werden kann.

Bei der in Fig. 3 gezeigten Ausführung des Hauptzylinders nach der Erfindung ist der drucklose Raum 26 als eine gestufte Sackbohrung ausgebildet. Die erwähnte Stufe wird durch eine radiale Ringfläche 36 gebildet, an der bei der Betätigung der Schaltkolben 3 mit seinem Führungsbund 28 anschlägt. Der Außendurchmesser der zweiten Druckfeder 6 entspricht etwa dem Durchmesser des diese Druckfeder 6 aufnehmenden, den drucklosen Raum 26 bildenden Bohrungsabschnitts. Der drucklose Raum 26 ist bei diesem Ausführungsbeispiel mittels im Hauptzylindergehäuse 1 ausgebildeter Druckmittelkanäle 34 und 35 direkt mit dem Behälteranschluß 16 verbunden. Denkbar ist auch eine modifizierte Ausführung, deren Schaltkolben mit einer axialen Ausnehmung versehen ist, die die zweite Druckfeder 6 teilweise aufninmmt.

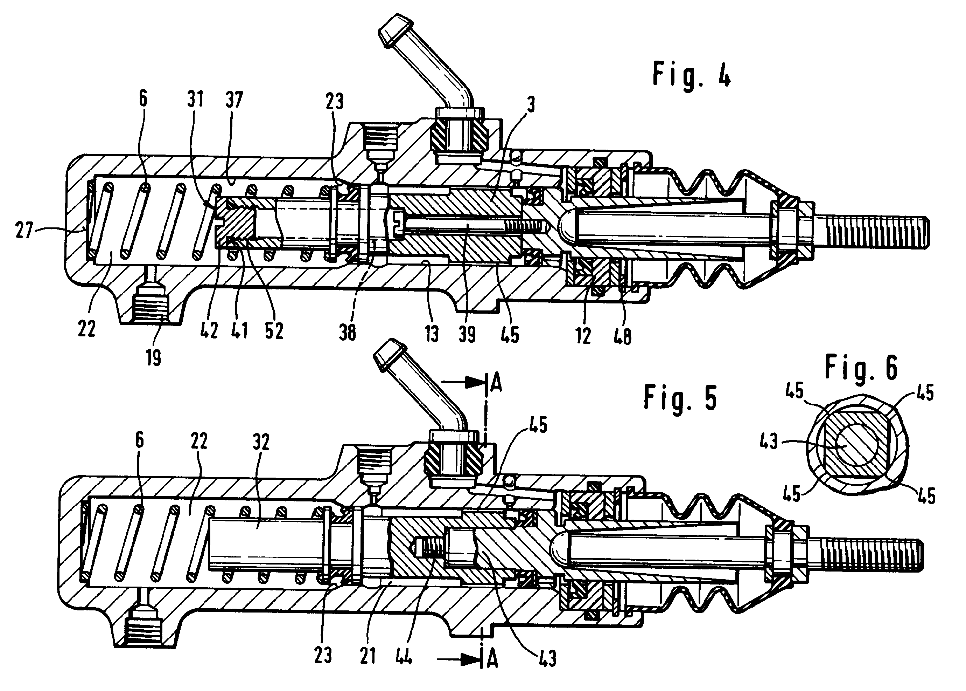

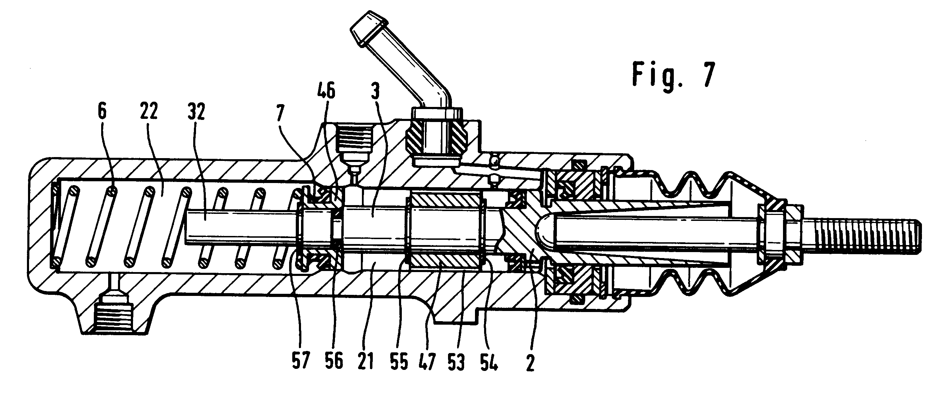

Bei dem in Fig. 4 gezeigten Hauptzylinder liegt dessen Schaltkolben 3 axial direkt am Kolben 2 an. Der Ausgleichsraum 22 ist durch den an den Druckraum 21 angrenzenden Bohrungsabschnitt 37 gebildet, der sich zwischen der Schräge 23 und dem Boden 27 der Bohrung 13 erstreckt. Der mit zylindersegmentförmigen Führungsflächen 45 (siehe auch Fig. 6) versehene Schaltkolben 3 weist eine axiale durchgehende Bohrung 38 auf, die einen den Schaltkolben 3 mit dem Kolben 2 verbindenden Schraubbolzen 39 aufnimmt und an ihrem offenen Ende mit einem Gewinde 52 versehen ist, in das ein Gewindestopfen 42 eingedreht ist. Um eine vollständige Trennung der beiden hydraulischen Räume 21,22 voneinander zu gewährleisten, trägt der Gewindestopfen 42 einen Dichtring 41, der die Bohrung 38 gegenüber dem Ausgleichsraum 22 abdichtet. Da der Gewindestopfen 42 gleichzeitig den Anschlag 31 des Schaltkolbens 3 bildet, wird die Druckfeder 6 bei Betätigung vor Beschädigung wirksam geschützt. Bei einer Lenkbremsung, bei der nur ein der beiden Hauptzylinder (Fig. 1) betätigt wird, wird die Dichtmanschette 7 des Schaltkolbens 3 des nicht betätigten Hauptzylinders mit dem im Druckraum des anderen Hauptzylinders herrschenden hydraulischen Druck beaufschlagt, so daß die daraus resultierende, entgegen der Betätigungsrichtung wirkende Kraft entweder vom Sicherungsring 48 oder dem Pedalanschlag aufgefangen werden muß.

Eine bessere Zentrierung des Schaltkolbens 3 wird bei der in Fig. 5 und 6 dargestellten Ausführungsform des Erfindungsgegenstandes dadurch erreicht, daß der Kolben 2 mit einer axialen, vorzugsweise zylindrischen Verlängerung 43 versehen ist, auf die der Schaltkolben 3 aufgeschoben und mittels eines an der Verlängerung 43 ausgebildeten Gewindeabschnitts 44 mit dem Kolben 2 verschraubt ist.

Bei der in Fig. 7 gezeigten Ausführungsvariante ist der Schaltkolben 3 schließlich einteilig mit dem Kolben 2 ausgebildet. Im Verbindungsbereich der beiden Kolben 2,3 ist eine Führungshülse 47 unverschiebbar angeordnet, die mit ähnlichen zylindersegmentförmigen Führungsflächen 53 versehen ist, die in Fig. 6 dargestellt sind. Die Führungshülse 47 sitzt zwischen zwei Sicherungsringen 54,55, die in entsprechende, im Verbindungsbereich ausgebildete Ringnuten eingesetzt sind.

Die den Ausgleichsraum 22 vom Druckraum 21 trennende Dichtmanschette 7 sitzt auf einer am Schaltkolben 3 aufgesteckten Hülse 46, die gegenüber dem Schaltkolben 3 mittels eines Dichtringes 56 abgedichtet und durch einen dritten Sicherungsring 57 gegen axiale Verschiebung gesichert ist. Gleichzeitig dient die an einer am Schaltkolben 3 ausgebildeten Stufe größeren Durchmessers abgestützte Hülse 46 als Abstützfläche für die im Ausgleichsraum 22 angeordnete, die beiden Kolben 2,3 zurückstellende Druckfeder 6.

### Bezugszeichenliste

- 1: Hauptzylindergehäuse
- 2: Kolben
- 3: Schaltkolben
- 4: Fesselungsschraube
- 5: Druckfeder
- 6: Druckfeder
- 7: Dichtmanschette
- 8: Dichtelement
- 9: Primärmanschette
- 10: Hauptzylinder
- 11: Manschette
- 12: Verschlußstück
- 13: Bohrung
- 14: Faltenbalg
- 15: Kolbenstange
- 16: Behälteranschluß
- 17: Behälteranschluß
- 18: Anschlaghülse
- 19: Anschluß
- 20: Hauptzylinder
- 21: Druckraum
- 22: Ausgleichsraum
- 23: Schräge
- 24: Anschlagscheibe
- 25: Ringraum
- 26: Raum
- 27: Boden
- 28: Führungsbund
- 29: Ringnut
- 30: Bremspedal
- 31: Anschlag
- 32: Fortsatz
- 33: Schnüffelloch
- 34: Druckmittelkanal
- 35: Druckmittelkanal
- 36: Ringfläche
- 37: Abschnitt
- 38: Bohrung
- 39: Schraubbolzen
- 40: Bremspedal
- 41: Dichtring
- 42: Gewindestopfen
- 43: Verlängerung
- 44: Gewindeabschnitt
- 45: Führungsfläche
- 46: Hülse
- 47: Führungshülse
- 48: Sicherungsring
- 49: Anschluß
- 50: Druckmittelvorratsbehälter
- 51: Druckmittelkanal
- 52: Gewinde
- 53: Führungsfläche
- 54: Sicherungsring
- 55: Sicherungsring
- 56: Dichtung
- 57: Sicherungsring
- 58: Durchgang
- 60: Ausgleichsleitung

- 70: Bremsleitung

- 80: Bremsleitung

- 90: Bremse

- 100: Bremse

## Patentansprüche

1. Hauptzylinder für eine hydraulische Brems- und Lenkbremsanlage für Kraftfahrzeuge, mit einem Paar Hauptzylinder (10,20), die zum Abbremsen eines Fahrzeuges gleichzeitig und zur Lenkunterstützung unabhängig voneinander betätigbar sind und je einen pedalbetätigten, in einer im Hauptzylindergehäuse (1) vorgesehenen Bohrung (13) verschiebbar geführten, einen Druckraum (21) begrenzenden Kolben (2) aufweisen, wobei die Druckräume (21) mit einem drucklosen Druckmittelvorratsbehälter (50) in Verbindung stehen, mit Bremsen (90,100) an Rädern auf entgegengesetzten Seiten des Fahrzeugs verbindbar sind, und über eine Ausgleichsleitung (60) miteinander verbunden werden, wenn die Hauptzylinder (10,20) gleichzeitig betätigt werden bzw. mittels einer Ventileinrichtung voneinander getrennt werden, wenn einer der Hauptzylinder (10,20) allein betätigt wird, dadurch **gekennzeichnet**, daß die Ausgleichsleitung (60) an einen an den Druckraum (21) angrenzenden Ausgleichsraum (22) angeschlossen ist, daß die Ventileinrichtung Druckraum (21) und Ausgleichsraum (22) in der Ausgangsstellung des Kolbens (2) gegeneinander abdichtet und bei betätigtem Kolben (2) miteinander verbindet, und daß die Ventileinrichtung durch eine an einem vom Kolben (2) betätigbaren Schaltkolben (3) angeordnete Dichtmanschette (7) gebildet ist.

2. Hauptzylinder nach Anspruch 1, **dadurch gekennzeichnet**, daß am Übergang zwischen dem Druck- (21) und dem Ausgleichsraum (22) eine Schräge (23) ausgebildet ist, in oder nach deren dem Druckraum (21) zugewandten Bereich die Dichtmanschette (7) anliegt.

3. Hauptzylinder nach Anspruch 1 oder 2, dadurch **gekennzeichnet**, daß der Ausgleichsraum (22) durch einen in der Bohrung (13) ausgebildeten Ringraum (25) größeren Durchmessers gebildet ist, der durch ein am Schaltkolben (3) angeordnetes Dichtelement (8) von einem drucklosen Raum (26) getrennt ist.

4. Hauptzylinder nach Anspruch 3, dadurch **gekennzeichnet**, daß der drucklose Raum (26) einerseits durch den Boden (27) der Bohrung (13) und andererseits durch einen am Schaltkolben (3) ausgebildeten Führungsbund (28) begrenzt ist und daß das Dichtelement als eine zweite Dichtmanschette (8) ausgebildet ist, die in einer Ringnut (29) angeordnet ist, deren dem Ausgleichsraum (22) abgewandte Flanke durch den Führungsbund (28) gebildet ist.

5. Hauptzylinder nach Anspruch 1 oder 2, dadurch **gekennzeichnet**, daß der Schaltkolben (3) mit einem Anschlag (31,28) versehen ist, der bei Betätigung am Hauptzylindergehäuse (1) anschlägt.

6. Hauptzylinder nach Anspruch 5, dadurch **gekennzeichnet**, daß der Anschlag durch einen axialen zylindrischen Fortsatz (32) des Schaltkolbens (3) gebildet ist, der am Boden (27) der Bohrung (13) anschlägt.

7. Hauptzylinder nach Anspruch 6, dessen Kolben mit einer Primärmanschette versehen ist, die in Ruhestellung im Abstand von der Mündung eines den Druckmittelvorratsbehälter mit dem Druckraum verbindenden Schnüffelloches angeordnet ist, dadurch **gekennzeichnet**, daß die Stirnfläche des Fortsatzes (32) in Ruhestellung in einem Abstand vom Boden (27) angeordnet ist, der dem Abstand zwischen der Primärmanschette (9) und dem Schnüffelloch (33) entspricht.

8. Hauptzylinder nach einem der Ansprüche 1 bis 7, dadurch **gekennzeichnet**, daß zwischen dem Kolben (2) und dem Schaltkolben (3) eine Druckfeder (5) angeordnet ist, die am Kolben (2() gefesselt ist.

9. Hauptzylinder nach Anspruch 3 oder 4, dadurch **gekennzeichnet**, daß der drucklose Raum (26) mit dem Druckmittelvorratsbehälter (50) verbindbar ist.

10. Hauptzylinder nach Anspruch 9, dadurch **gekennzeichnet**, daß im Hauptzylindergehäuse (1) Druckmittelkanäle (34,35) vorgesehen sind, die den drucklosen Raum (26) mit einem den Druckraum (21) mit dem Druckmittelvorratsbehälter (50) verbindenden Behälteranschluß (16) verbinden.

11. Hauptzylinder nach Anspruch 8, dadurch **gekennzeichnet**, daß am Schaltkolben (3) eine Anschlaghülse (18) axial abgestützt ist, die mit einer in den Kolben (2) eingeschraubten Fesselungsschraube (4) zusammenwirkt.

12. Hauptzylinder nach Anspruch 4 und 5, dadurch **gekennzeichnet**, daß der Schaltkolben (3) mit seinem Führungsbund (28) an einer im Zylindergehäuse (1) ausgebildeten Ringfläche (36) anschlägt.

13. Hauptzylinder nach Anspruch 8, dadurch **gekennzeichnet**, daß im drucklosen Raum (26) eine zweite Druckfeder (6) vorgesehen ist, die sich einerseits am Boden (27) der Bohrung (13) und andererseits am Schaltkolben (3) abstützt, und deren Federkraft kleiner ist als die der Druckfeder (5).

14. Hauptzylinder nach Anspruch 1 oder 2, dadurch **gekennzeichnet**, daß der Schaltkolben (3) unmittelbar am Kolben (2) anliegt und mit ihm kraft- und formschlüssig verbunden ist, wobei der Ausgleichsraum (22) durch den sich zwischen dem Boden (27) der Bohrung (13) und der Schräge (23) erstreckenden Abschnitt (37) gebildet ist.

15. Hauptzylinder nach Anspruch 14, dadurch **gekennzeichnet**, daß der Schaltkolben (3) eine durchgehende Bohrung (38) aufweist, die einen den Schaltkolben (3) mit dem Kolben (2) verbindenden Schraubbolzen (39) aufnimmt und mittels eines mit einer Dichtung (41) versehenen Gewindestopfens (42) verschlossen ist.

16. Hauptzylinder nach Anspruch 5 und 15, dadurch **gekennzeichnet**, daß der Gewindestopfen (42) den Anschlag des Schaltkolbens (3) am Boden (27) der Bohrung (13) bildet.

17. Hauptzylinder nach Anspruch 14, dadurch **gekennzeichnet**, daß der Kolben (2) eine axiale zylindrische Verlängerung (43) aufweist, auf der der Schaltkolben (3) aufgeschoben und mit einem an der Verlängerung (43) ausgebildeten Gewindeabschnitt (44) verschraubt ist.

18. Hauptzylinder nach einem der Ansprüche 5 bis 17, dadurch **gekennzeichnet**, daß der Schaltkolben (3) mit zylindersegmentförmigen Führungsflächen (45) versehen ist.

19. Hauptzylinder nach Anspruch 1 oder 2 und Anspruch 6, dadurch **gekennzeichnet**, daß der Schaltkolben (3) einschließlich seines Fortsatzes (32) einteilig mit dem Kolben (2) ausgebildet ist und daß die Dichtmanschette (7) von einer auf den Schaltkolben (3) aufgeschobenen Hülse (46) gehalten wird, die gegenüber dem Schaltkolben (3) abgedichtet und unverschiebbar angeordnet ist.

20. Hauptzylinder nach Anspruch 19, dadurch **gekennzeichnet**, daß am Übergang zwischen dem Kolben (2) und dem Schaltkolben (3) eine Führungshülse (47) unverschiebbar angeordnet ist, die im Druckraum (21) mit der Wandung der Bohrung (13) zusammenwirkt.

## Claims

1. A master cylinder for a hydraulic brake system and steering brake system for automotive vehicles, comprising a pair of master cylinders (10, 20) which are operable simultaneously for braking a vehicle and independently of one another for power steering, each being furnished with one pedal-operated piston (2) that is slidably guided in a bore (13) in the master cylinder housing (1) and confines a pressure chamber (21), the said pressure chambers (21) being in communication with an unpressurized pressure-fluid supply reservoir (50), being connectible to brakes (90, 100) on wheels on opposite sides of the vehicle and becoming interconnected through a compensating line (60) when the master cylinders (10, 20) are actuated simultaneously and/or are isolated from each other by way of a valve assembly once any one of the master cylinders (10, 20) is actuated alone,
**characterised** in that the compensating line (60) connects to a compensating chamber (22) adjoining the pressure chamber (21), in that the valve assembly shuts off the pressure chamber (21) in relation to the compensating chamber (22) in the initial position of the piston (2) and interconnects them when the piston (2) is actuated, and in that the valve assembly is formed by a sealing cup (7) arranged on an operating piston (3) that is actuatable by the piston (2).

2. A master cylinder as claimed in claim 1,
**characterised** in that a slope (23) is designed at the transition from the pressure chamber (21) to the compensating chamber (22), in whose and/or behind whose area facing the pressure chamber (21) the sealing cup (7) is abutting.

3. A master cylinder as claimed in claim 1 or 2,
**characterised** in that the compensating chamber (22) is formed by a larger-diameter annular chamber (25) which is designed in the bore (13) and which is isolated from an unpressurized chamber (26) by a sealing element (8) arranged at the operating piston (3).

4. A master cylinder as claimed in claim 3,
**characterised** in that the unpressurized chamber (26) is confined by the bottom (27) of the bore (13), on the one hand, and by a guiding collar (28) provided on the operating piston (3), on the other hand, and in that the sealing element is designed as a second sealing cup (8) which is arranged in an annular groove (29), whose flank averted from the compensating chamber (22) is formed by the guiding collar (28).

5. A master cylinder as claimed in claim 1 or 2,
**characterised** in that the operating piston (3) is provided with a stop (31, 28) which, on actuation, moves to abut on the master cylinder housing (1).

6. A master cylinder as claimed in claim 5,
**characterised** in that the stop is formed by an axial cylindrical extension (32) of the operating piston (3) which moves to bear against the bottom (27) of the bore (13).

7. A master cylinder as claimed in claim 6, whose piston is furnished with a primary cup which, in the inactive position, is arranged at a distance from the port of a breathering bore interconnecting the pressure-fluid supply reservoir and the pressure chamber,
**characterised** in that the end surface of the extension (32) is positioned in the inactive position at a distance from the bottom (27) which corresponds to the distance between the primary cup (9) and the breathering bore (33).

8. A master cylinder as claimed in any one of claims 1 to 7,
**characterised** in that a compression spring (5) which is captivated at the piston (2) is interposed between said piston (2) and the operating piston (3).

9. A master cylinder as claimed in claim 3 or 4,
**characterised** in that the unpressurized chamber (26) is connectible with the pressure-fluid supply reservoir (50).

10. A master cylinder as claimed in claim 9,
**characterised** in that pressure-fluid ducts (34, 35) are provided in the master cylinder housing (1) which connect the unpressurized chamber (26) to a reservoir port (16) constituting a connection between the pressure chamber (21) and the pressure-fluid supply reservoir (50).

11. A master cylinder as claimed in claim 8,
**characterised** in that a stop sleeve (18) is axially supported on the operating piston (3) and cooperates with a captivating screw (4) that is screwed into the piston (2).

12. A master cylinder as claimed in claims 4 and 5,
**characterised** in that the operating piston (3) abuts with its guiding collar (28) on an annular surface (36) formed in the cylinder housing (1).

13. A master cylinder as claimed in claim 8,
**characterised** in that the unpressurized chamber (26) houses a second compression spring (6) which is supported on the bottom (27) of the bore (13), on the one hand, and on the operating piston (3), on the other hand, and whose spring force is less than that of the compression spring (5).

14. A master cylinder as claimed in claim 1 or 2,
**characterised** in that the operating piston (3) is in direct abutment on the piston (2) and is operatively and positively engaged therewith, with the compensating chamber (22) being formed by the portion (37) extending between the bottom (27) of the bore (13) and the slope (23).

15. A master cylinder as claimed in claim 14,
**characterised** in that the operating piston (3) contains a through-bore (38) which receives a screw bolt (39) coupling the operating piston (3) to the piston (2) and which is closed by a threaded plug (42) that is furnished with a seal (41).

16. A master cylinder as claimed in claims 5 and 15,
**characterised** in that the threaded plug (42) forms the stop of the operating piston (3) on the bottom (27) of the bore (13).

17. A master cylinder as claimed in claim 14,
**characterised** in that the piston (2) comprises an axial cylindrical extension (43) onto which the operating piston (3) is mounted and is screwed to a threaded portion (44) provided on the extension (43).

18. A master cylinder as claimed in any one of claims 5 to 17,
**characterised** in that the operating piston (3) is furnished with cylinder-segment-shaped guiding surfaces (45).

19. A master cylinder as claimed in claim 1 or 2 and in claim 6,
**characterised** in that the operating piston (3) including its extension (32) is designed integrally with the piston (2), and in that the sealing cup (7) is retained by a sleeve (46) that is mounted onto the operating piston (3) and is sealed and unslidably arranged in relation to the operating piston (3).

20. A master cylinder as claimed in claim 19,
**characterised** in that, at the transition from the piston (2) to the operating piston (3), a guiding sleeve (47) is undisplaceably arranged which cooperates in the pressure chamber (21) with the wall of the bore (13).

## Revendications

1. Maître-cylindre pour système hydraulique de freinage et de direction par freinage, pour véhicule automobile, comprenant deux maîtres-cylindres (10, 20) qui sont agencés de façon à pouvoir etre actionnés en même temps en vue de freiner un véhicule et indépendamment l'un de l'autre en vue de participer à la direction et qui comprennent chacun un piston (2), actionné au moyen d'une pédale, qui délimite une chambre de pression (21) et est guidé, de façon à pouvoir s'y déplacer en translation, dans un alésage (13) ménagé dans le boîtier (1) du maître-cylindre, les chambres de pression (21) étant reliées à un réservoir de stockage d'agent de pression (50) et étant agencées de façon à pouvoir être reliées à des freins (90, 100) disposés sur des roues situées sur des côtés opposés du véhicule, tandis que ces chambres de pression (21) communiquent entre elles par l'intermédiaire d'une conduite d'équilibrage (60) lorsque les maîtres-cylindres (10, 20) sont actionnés en même temps ou sont séparées l'une de l'autre au moyen d'un dispositif de valve lorsque seul l'un des maîtres-cylindres (10, 20) est actionné, caractérisé en ce que la conduite d'équilibrage (60) est raccordée à une chambre d'équilibrage (22) qui est adjacente à la chambre de pression (21), en ce que le dispositif de valve assure l'étanchéité de la chambre de pression (21) et de la chambre d'équilibrage (22) l'une vis-à-vis de l'autre dans la position de repos du piston (2) et les fait communiquer l'une avec l'autre lorsque le piston (2) est actionné et en ce que le dispositif de valve est constitué d'une coupelle d'étanchéité (7) disposée sur un piston de commutation (3) agencé de façon à pouvoir être actionné par le piston (2).

2. Maître-cylindre suivant la revendication 1, caractérisé en ce qu'une partie chanfreinée (23) est ménagée à l'endroit de la transition entre la chambre de pression (21) et la chambre d'équilibrage (22), la coupelle d'étanchéité (7) prenant appui dans ou après la zone de cette partie chanfreinée (23) qui est située du côté de la chambre de pression (21).

3. Maître-cylindre suivant l'une des revendications 1 et 2, caractérisé en ce que la chambre d'équilibrage (22) est formée par une chambre annulaire (25) de plus grand diamètre qui est ménagée dans l'alésage (13) et qui est séparée d'une chambre sans pression (26) par un élément d'étanchéité (8) disposé sur le piston de commutation (3).

4. Maître-cylindre suivant la revendication 3, caractérisé en ce que la chambre sans pression (26) est délimitée d'une part par le fond (27) de l'alésage (13) et d'autre part par une collerette de guidage (28) formée sur le piston de commutation (3) et en ce que l'élément d'étanchéité est réalisé sous la forme d'une seconde coupelle d'étanchéité (8) qui est disposée dans une gorge annulaire (29) dont la collerette de guidage (28) constitue le flanc qui est situé du côté opposé à la chambre d'équilibrage (22).

5. Maître-cylindre suivant l'une des revendications 1 et 2, caractérisé en ce que le piston de commutation (3) est pourvu d'une butée (31, 28) qui vient en butée sur le boîtier (1) du maître-cylindre lors d'un actionnement.

6. Maître-cylindre suivant la revendication 5, caractérisé en ce que la butée est constituée par une partie cylindrique axiale de prolongement (32) du piston de commutation (3) qui vient en butée sur le fond (27) de l'alésage (13).

7. Maître-cylindre suivant la revendication 6, dont le piston est pourvu d'une coupelle principale qui, dans la position de repos, est située à distance du débouché d'un orifice reniflard qui fait communiquer le réservoir de stockage d'agent de pression avec la chambre de pression, caractérisé en ce qu'en position de repos, la surface frontale de la partie de prolongement (32) est située à une distance du fond (27) qui est égale à la distance entre la coupelle d'étanchéité (9) et l'orifice reniflard (33).

8. Maître-cylindre suivant l'une des revendications 1 à 7, caractérisé en ce qu'entre le piston (2) et le piston de commutation (3), il est disposé un ressort de compression (5) qui est retenu sur le piston (2).

9. Maître-cylindre suivant l'une des revendications 3 et 4, caractérisé en ce que la chambre sans pression (26) est agencée de façon à pouvoir être reliée au réservoir de stockage d'agent de pression (50).

10. Maître-cylindre suivant la revendication 9, caractérisé en ce que, dans le boîtier (1) du maître-cylindre, il est ménagé des conduits d'agent de pression (34, 35) qui font communiquer la chambre sans pression (26) avec un raccord de réservoir (16) servant à la liaison avec le réservoir de stockage d'agent de pression (50).

11. Maître-cylindre suivant la revendication 8, caractérisé en ce qu'une douille de butée (18) prend appui axialement sur le piston de commutation (3), cette douille de butée (18) coopérant avec une vis de retenue (4) qui est vissée dans le piston (2).

12. Maître-cylindre suivant l'une des revendications 4 et 5, caractérisé en ce que, par sa collerette de guidage (28), le piston de commutation (3) prend appui sur une surface annulaire (36) formée dans le boîtier (1) du maître-cylindre.

13. Maître-cylindre suivant la revendication 8, caractérisé en ce que, dans la chambre sans pression (26), il est prévu un second ressort de compression (6) qui prend appui d'une part sur le fond (27) de l'alésage (13) et d'autre part sur le piston de commutation (3) et dont le force d'action élastique est inférieure à celle du ressort de compression (5).

14. Maître-cylindre suivant l'une des revendications 1 et 2, caractérisé en ce que le piston de commutation (3) prend appui directement sur le piston (2) et est relié à ce dernier par complémentarité de formes et par application d'un effort, la chambre d'équilibrage (22) étant formée par la section (37) s'étendant entre le fond (27) de l'alésage (13) et la partie chanfreinée (23).

15. Maître-cylindre suivant la revendication 14, caractérisé en ce que le piston de commutation (3) comporte un alésage traversant (38) qui sert à loger un boulon fileté (39) reliant le piston de commutation (3) au piston (2) et qui est fermé au moyen d'un bouchon fileté (42) pourvu d'une étanchéité (41).

16. Maître-cylindre suivant l'une des revendications 5 et 15, caractérisé en ce que le bouchon fileté (42) constitue la butée du piston de commutation (3) sur le fond (27) de l'alésage (13).

17. Maître-cylindre suivant la revendication 14, caractérisé en ce que le piston (2) comporte une partie cylindrique axiale de prolongement (43) sur laquelle le piston de commutation (3) est emboîté et est vissé par une section filetée (44) formée sur la partie de prolongement (43).

18. Maître-cylindre suivant l'une des revendications 5 à 17, caractérisé en ce que le piston de commutation (3) est pourvu de surfaces de guidage (45) en forme de segments de cylindre.

19. Maître-cylindre suivant l'une des revendications 1 et 2 et la revendication 6, caractérisé en ce que le piston de commutation (3), y compris sa partie de prolongement (32), est réalisé d'une pièce avec le piston (2) et en ce que la coupelle d'étanchéité (7) est maintenue par un manchon (46) qui est enfilé sur le piston de commutation (3) et qui est disposé d'une manière étanche et sans possibilité de déplacement en translation vis-à-vis du piston de commutation (3).

20. Maître-cylindre suivant la revendication 19, caractérisé en ce qu'à l'endroit de la transition entre le piston (2) et le piston de commutation (3), il est disposé, sans possibilité de déplacement en translation, une douille de guidage (47) qui coopère dans la chambre de pression (21) avec la paroi de l'alésage (13).
